# EUROPÄISCHE PATENTSCHRIFT

(11) **EP 3 165 908 B1**
(45) Veröffentlichungstag und Bekanntmachung des Hinweises auf die Patenterteilung: **11.03.2020**
(21) Anmeldenummer: 16193416.1
(22) Anmeldetag: 12.10.2016
(51) Int. Cl.: G01N 21/90, B07C 5/342

(54) **VORRICHTUNG ZUR INSPEKTION MINDESTENS EINES DRUCKBILDES**
DEVICE FOR INSPECTION OF AT LEAST ONE PRINTED IMAGE
DISPOSITIF D'INSPECTION D'AU MOINS UNE IMAGE IMPRIMÉE

(30) Priorität: 03.11.2015 DE 102015221506
(43) Veröffentlichungstag der Anmeldung: 10.05.2017
(73) Patentinhaber: Koenig & Bauer Kammann GmbH, 32549 Bad Oeynhausen (DE)
(72) Erfinder: Steffen, Volker, 32051 Herford (DE)
(74) Vertreter: Koenig & Bauer AG

(56) Entgegenhaltungen:
- DE-A1-102008 034 744
- DE-A1-102012 224 026
- DE-U1- 20 305 967
- US-A- 3 891 324
- US-A- 5 495 330

## Beschreibung

Die Erfindung betrifft eine Vorrichtung zur Inspektion mindestens eines Druckbildes gemäß Anspruch 1.

Durch die DE 10 2013 013 746 B3 ist eine Vorrichtung zur optischen Inspizierung von Hohlglasartikeln hinsichtlich unterschiedlicher Eigenschaften bekannt, mit mehreren, jeweils für die Prüfung zumindest einer Eigenschaft eingerichteten, entlang eines Transportweges der Hohlglasartikel angeordneten Prüfstationen, wobei in jeder Prüfstation zumindest ein an die jeweilige Inspektionsaufgabe angepasster und positionierbarer Bildleiter zwecks Erfassung jeweils eines Teilbildes des zu prüfenden Hohlglasartikels vorgesehen ist, wobei sämtliche Bildleiter an ihren den Hohlglasartikeln abgekehrten Enden in einer Kamera zusammengeführt sind, die mit einer zur Bildverarbeitung der über die Bildleiter eingekoppelten, zumindest teilweise jeweils für unterschiedliche Inspektionskriterien konzipierten Teilbilder eingerichteten Auswerteeinheit in Verbindung steht.

Durch die DE 10 2005 057 872 B4 ist eine Inspektionsmaschine zum Prüfen von Gefäßen, insbesondere Flaschen bekannt, mit einem Transporteur zum Transportieren der Gefäße entlang eines Bogenpfades vorbei an zumindest einer auf der Höhe und/oder oberhalb der Gefäße dem Bogenpfad zugeordneten Inspektionseinrichtung, und mit wenigstens einer unterhalb des von einem Zuförderer zu einem Abförderer verlaufenden Bogenpfads angeordneten, die Gefäße von unten nach oben beleuchtenden Beleuchtungseinrichtung, wobei der Transporteur eine drehantreibbare Scheibe aufweist, deren Oberseite eine Aufstandsfläche für den Boden jedes direkt darauf stehend transportierten Gefäßes bildet, und die zumindest bereichsweise lichtdurchlässig ausgebildet ist, wobei zumindest entlang des Bogenpfades die Gefäße mittels der Scheibe durch Reibungskräfte voneinander beabstandet transportierbar sind.

Durch die DE 10 2008 034 744 A1 ist eine Etikettiermaschine bekannt, welche ein Etikettierkarussell aufweist, wobei dem Etikettierkarussell zu etikettierende Behälter an einer Einlaufseite zugeführt werden, und wobei die etikettierten Behälter an einer Auslaufseite aus dem Etikettenkarussell ausgeleitet werden, wobei zumindest an der Auslaufseite des Etikettierkarussells ein Inspektionskarussell angeordnet ist, das zumindest eine Inspektionsvorrichtung, vorzugsweise mehrere Inspektionsvorrichtungen für die gleiche oder unterschiedliche Inspektionsaufgaben aufweist.

Durch die DE 10 2012 224 026 A1 ist ein Inspektionsverfahren für auf einem Etikettierkarussell mit Etiketten ausgestattete Behälter bekannt, mit den Schritten: a) Einstellen einer Inspektionsdrehlage der etikettierten Behälter auf dem Etikettierkarussell; b) Übergeben der etikettierten Behälter mittels eines Auslaufsterns an einen insbesondere einbahnigen Linearförderer unter Beibehalten der Inspektionsdrehlage der Behälter; und c) seitliches Abbilden der Behälter beim Transport mit dem Linearförderer.

Durch die DE 203 05 967 U1 ist ein Modulträger zur Verwendung an Etikettiermaschinen bekannt, welche in Modulbauweise ausgeführt sind, wobei der Modulträger mit Mitteln ausgestattet ist, die der leichten Beweglichkeit dienen. Auch durch die EP 1 493 671 A1 ist ein Modulträger zur Verwendung an Flaschenbehandlungsmaschinen wie Etikettiermaschinen u. dgl. bekannt, welche in Modulbauweise ausgebildet sind, wobei der Modulträger und/oder die Module von dem Modulträger in einer ersten Bereitstellungsposition gehalten und an eine Flaschenbehandlungsmaschine in eine zweite Zentrier- und/oder Arbeitsposition verbringbar sind.

Durch die US 5,495,330 A ist ein eine Kamera enthaltenes Gerät zur Behälterinspektion bekannt.

Durch die US 3,891,324 A ist eine Inspektionsvorrichtung zur Inspektion von auf Flaschen angebrachten Etiketten bekannt.

Durch die DE 10 2011 108 754 A1 ist eine Vorrichtung zur Inspektion von Behältern bekannt, die mindestens ein Speichermodul für SOLL-Bilder, mindestens eine optische Erfassungseinheit zur Erzeugung von IST-Bildern mindestens eines zu inspizierenden Behälters, eine Auswerte- und Steuereinheit umfasst, wobei die Auswerte- und Steuereinheit mindestens einen Hauptprozessor und mindestens eine Grafikkarte umfasst, wobei die mindestens eine Grafikkarte mindestens zwei Grafikprozessoren umfasst und Graphikkartenprogrammierung zur Auslagerung von zu einem Vergleich von IST- mit SOLL-Bildern gehörenden Berechnungen auf die mindestens zwei Grafikprozessoren unterstützt.

Durch die EP 0 433 666 A2 ist eine Vorrichtung zur dreidimensionalen Inspektion von Hohlkörpern bekannt
- mit einem Förderer zur Bewegung der Hohlkörper durch einen Inspektionsbereich auf einer Kreisbahn unter gleichzeitigem Drehen der Hohlkörper um eine Symmetrieachse, die zur Achse der Kreisbahn parallel ist,
- mit einer Beleuchtungseinrichtung für die im Inspektionsbereich befindlichen Hohlkörper,
- mit einem photoelektrischen Wandler zum Empfang von Licht, das von den im Inspektionsbereich befindlichen Hohlkörpern ausgeht, und
- mit einer Gruppe von festen, ebenen Spiegeln, die im Lichtstrahlengang angeordnet und gegeneinander abgewinkelt sind,
- wobei die Beleuchtungseinrichtung die Hohlkörper innerhalb des Inspektionsbereiches homogen beleuchtet,
- wobei der photoelektrische Wandler Teil einer Matrix- oder Zeilenkamera mit zugeordnetem Prozessor und Monitor zur Bildverarbeitung ist, und
- wobei eine Gruppe von n festen, ebenen Spiegeln zwischen dem Inspektionsbereich und der Matrix- oder Zeilenkamera angeordnet ist, und
- wobei die n Spiegel derart winkelversetzt ausgerichtet sind, dass Licht aus dem gesamten Inspektionsbereich gleichzeitig erfasst ist und dass aus n aneinander anschließenden Abschnitten des Inspektionsbereiches austretendes Licht über je einen der n Spiegel gleichzeitig so versetzt auf den photoelektrischen Wandler gelenkt wird, dass von diesem n Teilbilder - je eines aus jedem Abschnitt - aufgezeichnet werden.

Der Erfindung liegt die Aufgabe zugrunde, eine Vorrichtung zur Inspektion mindestens eines Druckbildes zu schaffen, die in Verbindung mit einer eine Druckmaschine aufweisenden Produktionsanlage flexibel verwendbar ist.

Die Aufgabe wird erfindungsgemäß durch die Merkmale des Anspruches 1 gelöst. Die abhängigen Ansprüche zeigen vorteilhafte Ausgestaltungen und/oder Weiterbildungen der gefundenen Lösung.

Die mit der Erfindung erzielbaren Vorteile sind in Verbindung mit der nachfolgenden Beschreibung ersichtlich.

Ein Ausführungsbeispiel der Erfindung ist in den Zeichnungen dargestellt und wird im Folgenden näher beschrieben.

Es zeigen:
- Fig. 1: eine Vorrichtung zur Inspektion mindestens eines Druckbildes;
- Fig. 2: einen ersten Betriebszustand der Vorrichtung der Fig. 1;
- Fig. 3: einen zweiten Betriebszustand der Vorrichtung der Fig. 1.

In der Verpackungsindustrie werden Hohlkörper, z. B. Flaschen, Gläser, Flakons, Tuben oder Dosen, an ihrer jeweiligen Mantelfläche direkt oder mittelbar mit mindestens einem Druckbild versehen. Diese Hohlkörper sind z. B. aus Glas oder Keramik oder aus einem Kunststoff oder aus einem metallischen Werkstoff ausgebildet. Zur Qualitätssicherung der auf die betreffenden Hohlkörper aufgebrachten Druckbilder besteht das Bedürfnis, das jeweilige Druckbild zu inspizieren und in Abhängigkeit vom Inspektionsergebnis zu entscheiden, ob der betreffende Hohlkörper verkaufsfähig ist und z. B. als Verpackung verwendet werden kann. Das jeweilige Druckbild wird insbesondere durch eine z. B. in einem Siebdruckverfahren oder in einem Inkjetdruckverfahren oder in einem Offsetdruckverfahren druckende Druckmaschine erstellt und vorzugsweise direkt auf der Mantelfläche des betreffenden Hohlkörpers oder auf einem auf der Mantelfläche des betreffenden Hohlkörpers applizierten Bedruckstoff, z. B. auf einem Etikett aufgedruckt. Die Mantelfläche des betreffenden Hohlkörpers umschließt dessen Längsachse z. B. zylindrisch oder konisch, wobei der betreffende Hohlkörper orthogonal zu seiner Längsachse einen geometrisch beliebig geformten, insbesondere aber runden, ovalen oder eckigen Querschnitt aufweisen kann.

Der Hohlkörper mit dem mindestens einen zu inspizierenden Druckbild wird mit einer Transporteinrichtung entlang einer z. B. linearen Transportbahn transportiert. In der bevorzugten Ausführung werden mehrere Hohlkörper z. B. in einem Materialstrom aneinandergereiht mit der Transporteinrichtung entlang einer selben Transportbahn transportiert. Das jeweilige mindestens eine an dem betreffenden Hohlkörper angeordnete Druckbild ist vorzugsweise zeitnah und/oder in räumlicher Nähe zur Druckmaschine zu inspizieren. Eine Druckleistung der Druckmaschine liegt z. B. bei mehreren tausend Druckbildern pro Stunde, z. B. im Bereich zwischen 4.000 und 12.000 Druckbildern pro Stunde, so dass eine visuelle Inspektion der Druckbilder durch Bedienpersonal wirtschaftlich nicht zu bewältigen ist. Die Transporteinrichtung ist z. B. als ein den oder die Hohlkörper von der Druckmaschine abtransportierendes Transportband ausgebildet. Der Transport der Hohlkörper kann bezüglich deren Längsachse stehend oder liegend erfolgen. Nun ist es vielerorts entweder nicht möglich oder nur mit einem unvertretbar hohen Aufwand möglich, das betreffende Druckbild zu inspizieren, während der betreffende Hohlkörper entlang seiner durch die Transporteinrichtung bestimmten Transportbahn transportiert wird, da dazu eine Inspektionsvorrichtung in eine bestehende Produktionsanlage integriert werden müsste. Daher wird eine Vorrichtung zur Inspektion des mindestens einen Druckbildes vorgeschlagen, die als ein autarkes, mobiles Gerät ausgebildet und zur Ausführung der Inspektion an der den Hohlkörper transportierenden Transporteinrichtung angestellt ist und zumindest eine Fördereinrichtung aufweist, welche den das mindestens eine zu inspizierende Druckbild aufweisenden Hohlkörper aus seiner durch die Transporteinrichtung bestimmten Transportbahn entnimmt und in eine von der Transporteinrichtung räumlich getrennte Inspektionsposition fördert. Dadurch ist es möglich, ein an oder auf der Mantelfläche des betreffenden Hohlkörpers angeordnetes Druckbild zu inspizieren, insbesondere jedes an oder auf der Mantelfläche des betreffenden Hohlkörpers angeordnete Druckbild einer Einzelprüfung zu unterziehen. Die vorgeschlagene Vorrichtung zur Inspektion des mindestens einen Druckbildes hat den besonderen Vorteil, in Verbindung mit einer bestehenden, eine Druckmaschine aufweisenden Produktionsanlage flexibel verwendbar zu sein.

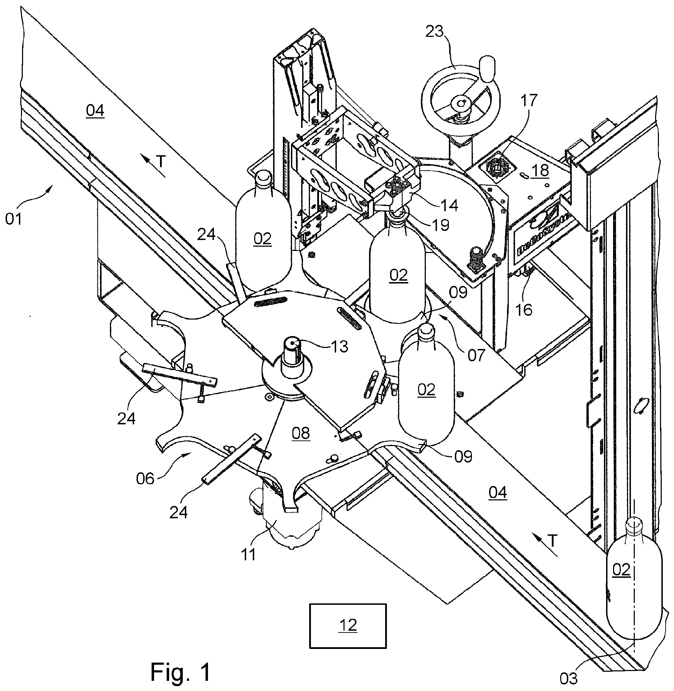

Die Fig. 1 bis 3 zeigen jeweils beispielhaft eine Vorrichtung zur Inspektion mindestens eines Druckbildes in verschiedenen Perspektiven bzw. verschiedene Betriebszustände dieser Vorrichtung. Diese als ein autarkes, mobiles Gerät ausgebildete Vorrichtung ist z. B. an eine vorzugsweise als ein Transportband ausgebildete Transporteinrichtung 01 einer insbesondere eine Druckmaschine aufweisenden Produktionsanlage angestellt, wobei die Vorrichtung zur Inspektion mindestens eines Druckbildes vorzugsweise an ein Abtransportband dieser Produktionsanlage angestellt ist. Die Transporteinrichtung 01 ist in den Fig. 1 bis 3 jeweils nur in einem Ausschnitt dargestellt. Die Transporteinrichtung 01 transportiert in Transportrichtung T längs einer vorzugsweise linearen, insbesondere horizontal ausgerichteten Transportbahn 04 z. B. jeweils als eine Flasche ausgebildete Hohlkörper 02, wobei die Hohlkörper 02 mit ihrer jeweiligen Längsachse 03 in diesem Beispiel jeweils stehend zur Transportrichtung T ausgerichtet sind.

Die Vorrichtung zur Inspektion mindestens eines Druckbildes weist eine Fördereinrichtung 06 auf, welche den das mindestens eine zu inspizierende Druckbild aufweisenden Hohlkörper 02 aus seiner durch die Transporteinrichtung 01 bestimmten Transportbahn 04 entnimmt und in eine von der Transporteinrichtung 01 getrennte Inspektionsposition 07 fördert. Diese Fördereinrichtung 06 ist vorzugsweise als eine rotierende sternförmige Scheibe 08 ausgebildet, wobei der betreffende Hohlkörper 02 von einem am Umfang der sternförmigen Scheibe 08 ausgebildeten Zacken 09 zu seiner Inspektionsposition 07 gefördert oder zumindest förderbar ist. Die Scheibe 08 der Fördereinrichtung 06 wird z. B. von einem Antrieb 11, insbesondere von einem Motor 11 kontinuierlich oder in einem insbesondere von einer nur schematisch angedeuteten Steuereinheit 12 gesteuerten Takt in eine Drehbewegung um eine z. B. vertikale Drehachse 13 versetzt, wobei Hohlkörper 02 durch diese Drehbewegung in die Inspektionsposition 07 oder von dort zurück zur Transportbahn 04 verbracht werden. In der bevorzugten Ausführung sind eine Fördergeschwindigkeit von der den betreffenden Hohlkörper 02 aus seiner Transportbahn 04 entnehmenden und in seine Inspektionsposition 07 fördernden Fördereinrichtung 06 und eine Transportgeschwindigkeit von der den betreffenden Hohlkörper 02 entlang seiner Transportbahn 04 transportierenden Transporteinrichtung 01 miteinander synchronisiert.

Die Vorrichtung zur Inspektion mindestens eines Druckbildes, d. h. das mobile Gerät weist insbesondere noch folgende weitere Komponenten auf:
a) eine Halteeinrichtung 14, welche den betreffenden Hohlkörper 02 an seiner Inspektionsposition 07 hält, wobei die Halteeinrichtung 14 z. B. als ein Zangensystem ausgebildet ist, welches den betreffenden Hohlkörper 02 an seinen hinsichtlich dessen vorzugsweise vertikal gerichteten Längsachse 03 diametralen Endflächen hält, wodurch der betreffende Hohlkörper 02 in seiner Inspektionsposition 07 fixiert wird bzw. zumindest zeitweilig fixiert ist;
b) eine Kamera 16, welche mindestens eine fotografische Abbildung von dem mindestens einen zu inspizierenden Druckbild erstellt und z. B. in Form von digitalen Bilddaten in einem ersten vorzugsweise elektronischen Speicher zwischenspeichert, wobei die Kamera 16 vorzugsweise als eine Zeilenkamera ausgebildet ist;
c) eine Beleuchtungseinrichtung 17, welche das mindestens eine zu inspizierende Druckbild zumindest während der Erstellung der betreffenden fotografischen Abbildung beleuchtet;
d) eine z. B. programmgesteuerte Bildverarbeitungseinrichtung 18, welche die betreffende fotografische Abbildung mit einer jeweiligen, z. B. in Form von digitalen Bilddaten vorliegenden Referenzabbildung vergleicht und in Abhängigkeit von dem durchgeführten Vergleich entscheidet, ob das inspizierte Druckbild unter Berücksichtigung zulässiger zuvor festgelegter Toleranzgrenzwerte seiner jeweiligen Referenzabbildung entspricht, und diese Entscheidung z. B. in Form einer digitalen Information in einem zweiten vorzugsweise elektronischen Speicher speichert;
e) und eine z. B. elektronische, vorzugsweise digitale Steuereinheit 12, welche zumindest folgende Funktionen steuert:
   - die Entnahme des betreffenden Hohlkörpers 02 aus seiner Transportbahn 04;
   - das Fördern dieses Hohlkörpers 02 in seine Inspektionsposition 07;
   - das Halten des Hohlkörpers 02 an seiner Inspektionsposition 07;
   - einen Zeitpunkt für das Erstellen der mindestens einen fotografischen Abbildung von dem mindestens einen zu inspizierenden Druckbild;
   - eine Beleuchtungsdauer der Beleuchtungseinrichtung 17 zur Beleuchtung des mindestens einen zu inspizierenden Druckbildes;
   - ein Lösen des inspizierten Hohlkörpers 02 aus der Halteeinrichtung 14;
   - ein Fördern des inspizierten Hohlkörpers 02 von seiner Inspektionsposition 07 zurück zu seiner an der Transporteinrichtung 01 gegebenen Transportbahn 04, wobei dieses Fördern wiederum mittels der Fördereinrichtung 06 ausgeführt wird.

Es ist vorzugsweise auch ein Antrieb 19 vorgesehen, welcher den an seiner Inspektionsposition 07 gehaltenen Hohlkörper 02 um seine Längsachse 03 rotiert, wobei die Kamera 16 die mindestens eine fotografische Abbildung von dem mindestens einen zu inspizierenden Druckbild während der Rotation des betreffenden Hohlkörpers 02 erstellt, wobei die Steuereinheit 12 auch die Rotation des an seiner Inspektionsposition 07 gehaltenen Hohlkörpers 02 steuert.

In der bevorzugten Ausführung ist zudem mindestens eine Stelleinrichtung 21; 22 vorgesehen, mit welcher die Kamera 16 in ihrem Abstand zu dem abzubildenden Druckbild eingestellt oder zumindest einstellbar ist, wobei die betreffende Stelleinrichtung 21; 22 jeweils als eine z. B. mittels eines Handrades manuell verstellte oder verstellbare Stelleinrichtung oder vorzugsweise als eine motorisch verstellte oder zumindest verstellbare Stelleinrichtung ausgebildet ist, wobei bei einer Erstellung mehrerer fotografischer Abbildungen von verschiedenen Druckbildern der jeweilige Abstand der Kamera 16 zu dem jeweiligen Druckbild jeweils betragsmäßig gleich eingestellt ist. Im Fall von zwei Stelleinrichtungen 21; 22 wirken diese insbesondere in zwei zueinander orthogonalen Richtungen, wobei diese Richtungen parallel zur Transportebene der die inspizierten Druckbilder aufweisenden Hohlkörper 02 gerichtet sind.

Die Vorrichtung zur Inspektion mindestens eines Druckbildes ist vorzugsweise in einem z. B. mit einem manuell oder elektromotorisch betätigbaren Stellantrieb 23 höhenverstellbaren Gestell angeordnet.

Es ist z. B. auch eine von der Steuereinheit 12 aufgrund einer Entscheidung der Bildverarbeitungseinrichtung 18 gesteuerte Ausschleuseinrichtung vorgesehen, mit welcher ein inspizierter Hohlkörper 02 aus seiner Transportbahn 04 ausgeschleust wird, wenn das inspizierte Druckbild unter Berücksichtigung zulässiger zuvor festgelegter Toleranzgrenzwerte seiner jeweiligen Referenzabbildung nicht entspricht. Die zulässigen Toleranzgrenzwerte für den Vergleich einer aktuell erstellten fotografischen Abbildung von einem an einem der Hohlkörper 02 angeordneten Druckbild mit dem betreffenden Referenzbild werden z. B. durch eine entsprechende Parametrisierung oder Programmierung der Bildverarbeitungseinrichtung 18 vor Ausführung des Inspektionsvorganges z. B. in Abhängigkeit von der Art des betreffenden Hohlkörpers 02 oder von seiner beabsichtigten Verwendung festgelegt.

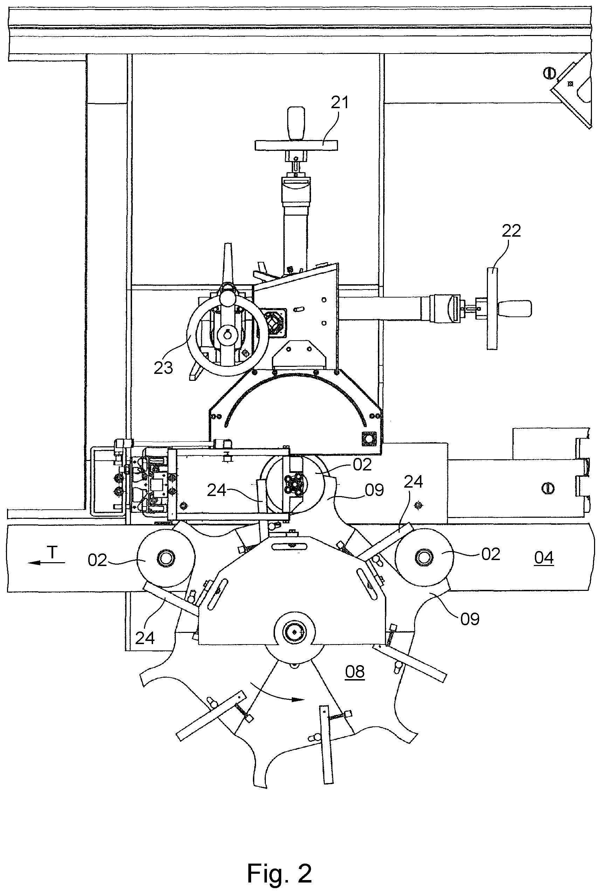

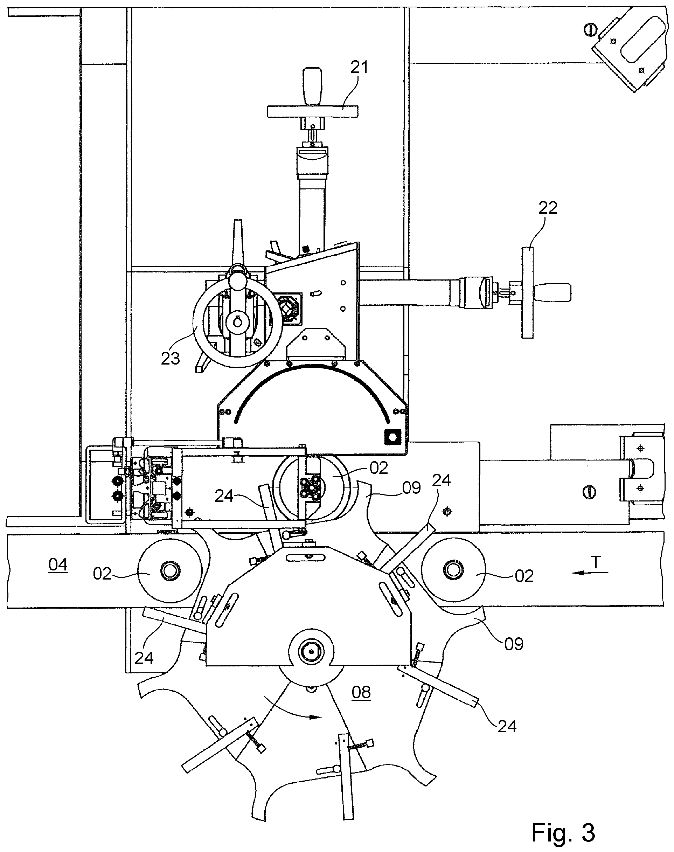

Eine Ausführungsvariante der vorgeschlagenen Vorrichtung sieht vor, dass die den betreffenden Hohlkörper 02 aus seiner Transportbahn 04 entnehmende und in seine Inspektionsposition 07 fördernde Fördereinrichtung 06 ein oder mehrere insbesondere steuerbare Greifersysteme 24 und/oder Vakuumelemente aufweist, mit welchen Greifersystemen 24 und/oder Vakuumelementen der betreffende zu fördernde Hohlkörper 02 während seines Verbringens in seine Inspektionsposition 07 oder von dort zurück zur Transporteinrichtung 01 insbesondere in einem Zusammenwirken z. B. mit einem Zacken 09 der z. B. als eine Scheibe 08 ausgebildeten Fördereinrichtung 06 fixiert und damit gegen ein Umkippen gesichert ist bzw. wird. Die Fixierung des betreffenden zu fördernden Hohlkörpers 02 erfolgt z. B. durch eine Klemmung oder kraftschlüssig durch einen Unterdruck, d. h. durch ein Ansaugen z. B. an den nächstliegenden Zacken 09. Die Drehrichtung der z. B. als eine Scheibe 08 ausgebildeten Fördereinrichtung 06 ist in den Fig. 2 und 3 jeweils durch einen Drehrichtungspfeil angedeutet.

Die Fig. 2 und 3 zeigen die Vorrichtung der Fig. 1 jeweils in einer Draufsicht. Fig. 2 zeigt die Vorrichtung der Fig. 1 beispielhaft in einem ersten Betriebszustand, in welchem von der Fördereinrichtung 06 zu verbringende Hohlkörper 02 jeweils durch ein Greifersystem 24 fixiert sind, wohingegen die Fig. 3 denjenigen zweiten Betriebszustand zeigt, in welchem von der Fördereinrichtung 06 zu verbringende Hohlkörper 02 jeweils durch eine Verstellung des jeweiligen Greifersystems 24 aus ihrer jeweiligen Fixierung gelöst sind.

### Bezugszeichenliste

- 01: Transporteinrichtung; Transportband; Abtransportband
- 02: Hohlkörper
- 03: Längsachse
- 04: Transportbahn
- 05: -
- 06: Fördereinrichtung
- 07: Inspektionsposition
- 08: Scheibe
- 09: Zacken
- 10: -
- 11: Antrieb; Motor
- 12: Steuereinheit
- 13: Drehachse
- 14: Halteeinrichtung
- 15: -
- 16: Kamera
- 17: Beleuchtungseinrichtung
- 18: Bildverarbeitungseinrichtung
- 19: Antrieb
- 20: -
- 21: Stelleinrichtung
- 22: Stelleinrichtung
- 23: Stellantrieb
- 24: Greifersystem

- T: Transportrichtung

## Patentansprüche

1. Vorrichtung zur Inspektion mindestens eines Druckbildes, wobei das mindestens eine Druckbild an oder auf der Mantelfläche eines mit einer Transporteinrichtung (01) entlang einer Transportbahn (04) transportierten Hohlkörpers (02) angeordnet ist, wobei eine Fördereinrichtung (06) vorgesehen ist, wobei die Fördereinrichtung (06) den das mindestens eine zu inspizierende Druckbild aufweisenden Hohlkörper (02) fördert, wobei zumindest eine Kamera (16) vorgesehen ist, welche derart angeordnet ist, dass sie mindestens eine fotografische Abbildung von dem mindestens einen zu inspizierenden Druckbild erstellt oder dass mit ihr eine solche fotografische Abbildung zumindest erstellbar ist, **dadurch gekennzeichnet, dass** diese die Inspektion des mindestens einen Druckbildes ausführende Vorrichtung als ein mobiles Gerät ausgebildet und zur Ausführung der Inspektion an der den Hohlkörper (02) transportierenden Transporteinrichtung (01) angestellt ist, wobei die als ein autarkes, mobiles Gerät ausgebildete Vorrichtung an die Transporteinrichtung (01) einer eine Druckmaschine aufweisenden Produktionsanlage angestellt ist, wobei dieses mobile Gerät die zumindest eine Kamera (16) und die Fördereinrichtung (06) aufweist, wobei die Fördereinrichtung (06) den das mindestens eine zu inspizierende Druckbild aufweisenden Hohlkörper (02) aus seiner durch die Transporteinrichtung (01) bestimmten Transportbahn (04) entnimmt und in eine von der Transporteinrichtung (01) getrennte Inspektionsposition (07) fördert.

2. Vorrichtung nach Anspruch 1, **dadurch gekennzeichnet, dass** das mobile Gerät eine Halteeinrichtung (14) aufweist, welche den betreffenden Hohlkörper (02) an seiner Inspektionsposition (07) hält.

3. Vorrichtung nach Anspruch 1 oder 2, **dadurch gekennzeichnet, dass** das mobile Gerät eine Beleuchtungseinrichtung (17) aufweist, welche das mindestens eine zu inspizierende Druckbild des an seiner Inspektionsposition (07) gehaltenen Hohlkörpers (02) zumindest während der Erstellung der betreffenden fotografischen Abbildung beleuchtet.

4. Vorrichtung nach Anspruch 1 oder 2 oder 3, **dadurch gekennzeichnet, dass** das mobile Gerät eine Bildverarbeitungseinrichtung (18) aufweist, welche die betreffende fotografische Abbildung mit einer jeweiligen Referenzabbildung vergleicht und in Abhängigkeit von dem durchgeführten Vergleich entscheidet, ob das inspizierte Druckbild unter Berücksichtigung zulässiger zuvor festgelegter Toleranzgrenzwerte seiner jeweiligen Referenzabbildung entspricht, wobei die Bildverarbeitungseinrichtung (18) diese Entscheidung in einem Speicher speichert.

5. Vorrichtung nach Anspruch 1 oder 2 oder 3 oder 4, **dadurch gekennzeichnet, dass** das mobile Gerät eine Steuereinheit (12) aufweist, wobei zumindest folgende Funktionen von dieser Steuereinheit (12) gesteuert sind:
a) die Entnahme des betreffenden Hohlkörpers (02) aus seiner Transportbahn (04),
b) das Fördern dieses Hohlkörpers (02) in seine Inspektionsposition (07),
c) das Halten des Hohlkörpers (02) an seiner Inspektionsposition (07),
d) ein Zeitpunkt für das Erstellen der mindestens einen fotografischen Abbildung von dem mindestens einen zu inspizierenden Druckbild,
e) ein Lösen des inspizierten Hohlkörpers (02) aus der Halteeinrichtung (14),
f) ein Fördern des inspizierten Hohlkörpers (02) von seiner Inspektionsposition (07) zurück zu seiner an der Transporteinrichtung (01) gegebenen Transportbahn (04).

6. Vorrichtung nach Anspruch 1 oder 2 oder 3 oder 4 oder 5, **dadurch gekennzeichnet, dass** die Mantelfläche des betreffenden Hohlkörpers (02) dessen Längsachse (03) umschließt, wobei ein Antrieb (11) vorgesehen ist, welcher den an seiner Inspektionsposition (07) gehaltenen Hohlkörper (02) um seine Längsachse (03) rotiert, wobei die mindestens eine fotografische Abbildung von dem mindestens einen zu inspizierenden Druckbild während der Rotation des betreffenden Hohlkörpers (02) von der Kamera (16) erstellt ist.

7. Vorrichtung nach Anspruch 5 oder 6, **dadurch gekennzeichnet, dass** von der Steuereinheit (12) des mobilen Gerätes jeweils eine Beleuchtungsdauer der Beleuchtungseinrichtung (17) zur Beleuchtung des mindestens einen zu inspizierenden Druckbildes und/oder die Rotation des an seiner Inspektionsposition (07) gehaltenen Hohlkörpers (02) gesteuert sind.

8. Vorrichtung nach Anspruch 1 oder 2 oder 3 oder 4 oder 5 oder 6 oder 7, **dadurch gekennzeichnet, dass** die Kamera (16) als eine Zeilenkamera ausgebildet ist.

9. Vorrichtung nach Anspruch 1 oder 2 oder 3 oder 4 oder 5 oder 6 oder 7 oder 8, **dadurch gekennzeichnet, dass** das mobile Gerät mindestens eine Stelleinrichtung (21; 22) aufweist, mit welcher die Kamera (16) in ihrem Abstand zu dem abzubildenden Druckbild eingestellt oder zumindest einstellbar ist.

10. Vorrichtung nach Anspruch 9, **dadurch gekennzeichnet, dass** die betreffende Stelleinrichtung (21; 22) als eine motorisch verstellte oder zumindest verstellbare Stelleinrichtung ausgebildet ist, wobei bei einer Erstellung mehrerer fotografischer Abbildungen von verschiedenen Druckbildern der jeweilige Abstand der Kamera (16) zu dem jeweiligen Druckbild jeweils betragsmäßig gleich eingestellt ist.

11. Vorrichtung nach Anspruch 1 oder 2 oder 3 oder 4 oder 5 oder 6 oder 7 oder 8 oder 9 oder 10, **dadurch gekennzeichnet, dass** die den betreffenden Hohlkörper (02) aus seiner Transportbahn (04) entnehmende und in seine Inspektionsposition fördernde Fördereinrichtung (06) als eine rotierende sternförmige Scheibe (08) ausgebildet ist, wobei der betreffende Hohlkörper (02) von einem am Umfang der sternförmigen Scheibe (08) ausgebildeten Zacken (09) zu seiner Inspektionsposition (07) gefördert oder zumindest förderbar ist.

12. Vorrichtung nach Anspruch 1 oder 2 oder 3 oder 4 oder 5 oder 6 oder 7 oder 8 oder 9 oder 10 oder 11, **dadurch gekennzeichnet, dass** eine Fördergeschwindigkeit von der den betreffenden Hohlkörper (02) aus seiner Transportbahn (04) entnehmenden und in seine Inspektionsposition (07) fördernden Fördereinrichtung (06) und eine Transportgeschwindigkeit von der den betreffenden Hohlkörper (02) entlang seiner Transportbahn (04) transportierenden Transporteinrichtung (01) miteinander synchronisiert sind.

13. Vorrichtung nach Anspruch 1 oder 2 oder 3 oder 4 oder 5 oder 6 oder 7 oder 8 oder 9 oder 10 oder 11 oder 12, **dadurch gekennzeichnet, dass** das mobile Gerät ein höhenverstellbares Gestell aufweist.

14. Vorrichtung nach Anspruch 4 oder 5 oder 6 oder 7 oder 8 oder 9 oder 10 oder 11 oder 12 oder 13, **dadurch gekennzeichnet, dass** eine von der Steuereinheit (12) aufgrund einer Entscheidung der Bildverarbeitungseinrichtung (18) gesteuerte Ausschleuseinrichtung vorgesehen ist, mit welcher ein inspizierter Hohlkörper (02) aus seiner Transportbahn (04) ausgeschleust wird, wenn das inspizierte Druckbild unter Berücksichtigung zulässiger zuvor festgelegter Toleranzgrenzwerte seiner jeweiligen Referenzabbildung nicht entspricht.

15. Vorrichtung nach Anspruch 4 oder 5 oder 6 oder 7 oder 8 oder 9 oder 10 oder 11 oder 12 oder 13 oder 14, **dadurch gekennzeichnet, dass** die den betreffenden Hohlkörper (02) aus seiner Transportbahn (04) entnehmende und in seine Inspektionsposition (07) fördernde Fördereinrichtung (06) ein oder mehrere steuerbare Greifersysteme (24) und/oder Vakuumelemente aufweist, mit welchen Greifersystemen (24) und/oder Vakuumelementen der betreffende zu fördernde Hohlkörper (02) während seines Verbringens in seine Inspektionsposition (07) oder von dort zurück zur Transporteinrichtung (01) fixiert ist.

## Claims

1. A device for inspecting at least one printed image, wherein the at least one printed image is arranged at or on the lateral surface of hollow body (02) transported with a transport device (01) along a transport path (04), wherein a conveyor (06) is provided, wherein the conveyor (06) conveys the hollow body (02) having the at least one printed image, wherein at least one camera (16) is provided, which is arranged such that it creates at least one photographic image of the at least one printed image to be inspected or that such a photographic image can at least be created with it, **characterized in that** the device carrying out the inspection of the at least one printed image is designed as a mobile device and is positioned to carry out the inspection on the transport device (01) transporting the hollow body (01), wherein the device designed as a self-sufficient, mobile device is positioned on the transport device (01) of a production facility having a printing press, wherein this mobile device has the at least one camera (16) and the conveyor (06), wherein the conveyor (06) takes the hollow body (02) having the at least one printed image to be inspected from its transport path (04) determined by the transport device (01) and conveys it to an inspection position (07) separate from the transport device (01).

2. The device according to Claim 1, **characterized in that** the mobile device has a holding device (14) which holds the relevant hollow body (02) at its inspection position (07).

3. The device according to Claim 1 or 2, **characterized in that** the mobile device has a lighting device (17) which illuminates the at least one printed image of the hollow body (02) to be inspected at its inspection position (07) at least during the creation of the relevant photographic image.

4. The device according to Claim 1 or 2 or 3, **characterized in that** the mobile device has an image processing device (18) which compares the relevant photographic image with a respective reference image and, depending on the conducted comparison, decides whether the inspected printed image, taking into consideration allowable predeterminable tolerance limits, corresponds to its respective reference image, wherein the image processing device (18) stores this decision in a memory.

5. The device according to Claim 1 or 2 or 3 or 4, **characterized in that** the mobile device has a control unit (12), wherein at least the following functions are controlled by this control unit (12):
a) the removal of the relevant hollow body (02) from its transport path (04),
b) the conveying of this hollow body (02) to its inspection position (07),
c) the holding of the hollow body (02) at its inspection position (07),
d) a time for the creation of the at least one photographic image of the at least one printed image to be inspected,
e) a release of the hollow body (02) to be inspected from the holding device (14),
f) a conveying of the inspected hollow body (02) from its inspection position (07) back to its given transport path (04) on the transport device (01).

6. The device according to Claim 1 or 2 or 3 or 4 or 5, **characterized in that** the lateral surface of the relevant hollow body (02) encloses its longitudinal axis (03), wherein a drive (11) is provided, which rotates the hollow body (02) held at its inspection position (07) around its longitudinal axis (03), wherein the at least one photographic image of the at least one printed image to be inspected is created by the camera (16) during the rotation of the relevant hollow body (02).

7. The device according to Claim 5 or 6, **characterized in that** respectively an illumination period of the illumination device (17) for illuminating the at least one printed image to be inspected and/or the rotation of the hollow body (02) held at its inspection position (07) are controlled by the control unit (12) of the mobile device.

8. The device according to Claim 1 or 2 or 3 or 4 or 5 or 6 or 7, **characterized in that** the camera (16) is designed as a line camera.

9. The device according to Claim 1 or 2 or 3 or 4 or 5 or 6 or 7 or 8, **characterized in that** the mobile device has at least one adjusting device (21; 22) with which the camera (16) is adjusted or at least can be adjusted in its distance to the printed image to be reproduced.

10. The device according to Claim 9, **characterized in that** the relevant adjusting device (21; 22) is designed as a motorized or at least adjustable adjusting device, wherein in the creation of several photographic images of different printed images the respective distance of the camera (16) to the respective printed image is in each case of equal amount.

11. The device according to Claim 1 or 2 or 3 or 4 or 5 or 6 or 7 or 8 or 9 or 10, **characterized in that** the conveyor (06) removing the relevant hollow body (02) from its transport path (04) and conveying it to its inspection position is designed as a rotating star-shaped disk (08), wherein the relevant hollow body (02) is conveyed or at least can be conveyed from a prong (09) formed on the circumference of the star-shaped disk (08) to its inspection position (07).

12. The device according to Claim 1 or 2 or 3 or 4 or 5 or 6 or 7 or 8 or 9 or 10 or 11, **characterized in that** a conveying speed of a conveying device (06) removing the relevant hollow body (02) from its transport path (04) and conveying it to its inspection position (07) and a transport speed of the transport device (01) transporting the relevant hollow body (02) along its transport path (04) are synchronized with each other.

13. The device according to Claim 1 or 2 or 3 or 4 or 5 or 6 or 7 or 8 or 9 or 10 or 11 or 12, **characterized in that** the mobile device has a height-adjustable frame.

14. The device according to Claim 4 or 5 or 6 or 7 or 8 or 9 or 10 or 11 or 12 or 13, **characterized in that** a diversion device controlled by the control unit (12) on the basis of a decision of the image processing device (18) is provided, with which an inspected hollow body (02) is diverted from its transport path (04) when, taking into consideration allowable predeterminable tolerance limits, the inspected printed image does not correspond to its respective reference image.

15. The device according to Claim 4 or 5 or 6 or 7 or 8 or 9 or 10 or 11 or 12 or 13 or 14, **characterized in that** the conveying device (06) removing the relevant hollow body (02) from its transport path (04) and conveying it to its inspection position has one or more controllable gripper systems (24) and/or vacuum elements, with which gripper systems (24) and/or vacuum elements of the relevant hollow body (02) to be conveyed is fixed while being brought to its inspection position (07) or from there back to the transport device (01).

## Revendications

1. Dispositif destiné à inspecter au moins une image imprimée, dans lequel la au moins une image imprimée est agencée contre ou sur la surface d'enveloppe d'un corps creux (02) transporté avec un équipement de transport (01) le long d'une bande de transport (04), dans lequel un équipement d'acheminement (06) est prévu, dans lequel l'équipement d'acheminement (06) achemine le corps creux (02) qui présente la au moins une image imprimée à inspecter, dans lequel au moins une caméra (16) est prévue, laquelle est agencée de telle sorte qu'elle fabrique au moins une représentation photographique de la au moins une image imprimée à inspecter ou qu'avec elle une telle représentation photographique puisse au moins être fabriquée, **caractérisé en ce que** ce dispositif qui exécute l'inspection de la au moins une image imprimée est conçu en tant qu'appareil mobile et est employé pour exécuter l'inspection au niveau de l'équipement de transport (01) qui transporte le corps creux (02), dans lequel le dispositif conçu en tant qu'appareil mobile et autarcique est employé au niveau de l'équipement de transport (01) d'une installation de production qui présente une machine à imprimer, dans lequel cet appareil mobile présente la au moins une caméra (16) et l'équipement d'acheminement (06), dans lequel l'équipement d'acheminement (06) prélève le corps creux (02) qui présente la au moins une image imprimée à inspecter hors de sa bande de transport (04) déterminée par l'équipement de transport (01) et l'achemine jusque dans une position d'inspection (07) séparée de l'équipement de transport (01).

2. Dispositif selon la revendication 1, **caractérisé en ce que** l'appareil mobile présente un équipement de maintien (14) qui maintient le corps creux (02) en question au niveau de sa position d'inspection (07).

3. Dispositif selon la revendication 1 ou 2, **caractérisé en ce que** l'appareil mobile présente un équipement d'éclairage (17) qui éclaire la au moins une image imprimée à inspecter du corps creux (02) maintenu au niveau de sa position d'inspection (07) au moins pendant la fabrication de la représentation photographique en question.

4. Dispositif selon la revendication 1 ou 2 ou 3, **caractérisé en ce que** l'appareil mobile présente un équipement de traitement d'image (18) qui compare la représentation photographique en question à une représentation de référence respective et décide en fonction de la comparaison effectuée si l'image imprimée inspectée correspond à sa représentation de référence respective sur la base de valeurs de limite de tolérance recevables établies au préalable, dans lequel l'équipement de traitement d'image (18) mémorise cette décision dans une mémoire.

5. Dispositif selon la revendication 1 ou 2 ou 3 ou 4, **caractérisé en ce que** l'appareil mobile présente une unité de commande (12), dans lequel au moins les fonctions suivantes sont commandées par cette unité de commande (12) :
a) le prélèvement du corps creux (02) en question hors de sa bande de transport (04),
b) l'acheminement de ce corps creux (02) jusque dans sa position d'inspection (07),
c) le maintien du corps creux (02) au niveau de sa position d'inspection (07),
d) un moment pour la fabrication de la au moins une représentation photographique de la au moins une image imprimée à inspecter,
e) une libération du corps creux (02) inspecté hors de l'équipement de maintien (14),
f) un acheminement du corps creux (02) inspecté depuis sa position d'inspection (07) pour retourner à sa bande de transport (04) donnée au niveau de l'équipement de transport (01).

6. Dispositif selon la revendication 1 ou 2 ou 3 ou 4 ou 5, **caractérisé en ce que** la surface d'enveloppe du corps creux (02) en question entoure l'axe longitudinal (03) de celui-ci, dans lequel est prévu un entraînement (11) qui fait tourner le corps creux (02) maintenu au niveau de sa position d'inspection (07) autour de son axe longitudinal (03), dans lequel la au moins une représentation photographique de la au moins une image imprimée à inspecter est fabriquée par la caméra (16) pendant la rotation du corps creux (02) en question.

7. Dispositif selon la revendication 5 ou 6, **caractérisé en ce que** sont commandées par l'unité de commande (12) de l'appareil mobile respectivement une durée d'éclairage de l'équipement d'éclairage (17) pour éclairer la au moins une image imprimée à inspecter et/ou la rotation du corps creux (02) maintenu au niveau de sa position d'inspection (07).

8. Dispositif selon la revendication 1 ou 2 ou 3 ou 4 ou 5 ou 6 ou 7, **caractérisé en ce que** la caméra (16) est conçue en tant que caméra linéaire.

9. Dispositif selon la revendication 1 ou 2 ou 3 ou 4 ou 5 ou 6 ou 7 ou 8, **caractérisé en ce que** l'appareil mobile présente au moins un équipement de réglage (21 ; 22) avec lequel la caméra (16) est réglé ou au moins réglable quant à sa distance par rapport à l'image imprimée à représenter.

10. Dispositif selon la revendication 9, **caractérisé en ce que** l'équipement de réglage (21 ; 22) en question est conçu en tant qu'équipement de réglage ajusté ou au moins ajustable par moteur, dans lequel, lors d'une fabrication de plusieurs représentations photographiques de différentes images imprimées, la distance respective de la caméra (16) par rapport à l'image imprimée respective est respectivement réglée à l'identique en valeur absolue.

11. Dispositif selon la revendication 1 ou 2 ou 3 ou 4 ou 5 ou 6 ou 7 ou 8 ou 9 ou 10, **caractérisé en ce que** l'équipement d'acheminement (06) qui prélève le corps creux (02) en question hors de sa bande de transport (04) et l'achemine jusque dans sa position d'inspection est conçu en tant que disque (08) en forme d'étoile en rotation, dans lequel le corps creux (02) en question est ou au moins peut être acheminé depuis un cran (09) conçu sur le pourtour du disque (08) en forme d'étoile jusque dans sa position d'inspection (07).

12. Dispositif selon la revendication 1 ou 2 ou 3 ou 4 ou 5 ou 6 ou 7 ou 8 ou 9 ou 10 ou 11, **caractérisé en ce qu'**une vitesse d'acheminement de l'équipement d'acheminement (06) qui prélève le corps creux (02) en question hors de sa bande de transport (04) et l'achemine jusque dans sa position d'inspection (07) et une vitesse de transport de l'équipement de transport (01) qui transporte le corps creux (02) en question le long de sa bande de transport (04) sont synchronisées entre elles.

13. Dispositif selon la revendication 1 ou 2 ou 3 ou 4 ou 5 ou 6 ou 7 ou 8 ou 9 ou 10 ou 11 ou 12, **caractérisé en ce que** l'appareil mobile présente une armature réglable en hauteur.

14. Dispositif selon la revendication 4 ou 5 ou 6 ou 7 ou 8 ou 9 ou 10 ou 11 ou 12 ou 13, **caractérisé en ce qu'**est prévu un équipement d'évacuation commandé par l'unité de commande (12) suite à une décision de l'équipement de traitement d'image (18), avec lequel équipement d'évacuation un corps creux (02) inspecté est évacué hors de sa bande de transport (04) lorsque l'image imprimée inspectée ne correspond pas à sa représentation de référence respective sur la base de valeurs de limite de tolérance recevables établies au préalable.

15. Dispositif selon la revendication 4 ou 5 ou 6 ou 7 ou 8 ou 9 ou 10 ou 11 ou 12 ou 13 ou 14, **caractérisé en ce que** l'équipement d'acheminement (06) qui prélève le corps creux (02) en question hors de sa bande de transport (04) et l'achemine jusque dans sa position d'inspection (07) présente un ou plusieurs systèmes de préhension (24) et/ou des éléments sous vide qui peuvent être commandés, avec lesquels systèmes de préhension (24) et/ou éléments sous vide le corps creux (02) en question à acheminer est fixé pendant son introduction jusque dans sa position d'inspection (07) ou de là pour retourner jusqu'à l'équipement de transport (01).
